# EUROPÄISCHE PATENTSCHRIFT

(11) **EP 3 990 868 B1**
(45) Veröffentlichungstag und Bekanntmachung des Hinweises auf die Patenterteilung: **14.06.2023**
(21) Anmeldenummer: 20739887.6
(22) Anmeldetag: 26.06.2020
(51) Int. Cl.: G01D 21/00, G01D 21/02

(54) **SENSORELEMENT UND VORRICHTUNG ZUR ERFASSUNG VON PROZESSPARAMETERN IN EINER SINTERANLAGE**
SENSOR ELEMENT AND DEVICE FOR DETECTING PROCESS PARAMETERS IN A SINTERING SYSTEM
ÉLÉMENT CAPTEUR ET DISPOSITIF DE DÉTECTION DE PARAMÈTRES DE PROCESSUS DANS UNE INSTALLATION DE FRITTAGE

(30) Priorität: 29.08.2019 EP 19194365
(43) Veröffentlichungstag der Anmeldung: 04.05.2022
(73) Patentinhaber: Siemens Aktiengesellschaft, 80333 München (DE)
(72) Erfinder: HANISCH, Michael, 16540 Hohen Neuendorf (DE); JESKE, Nora, 10555 Berlin (DE); SOMMERFELD, Dennis, 12347 Berlin (DE); WITTREICH, Ulrich, 16727 Velten (DE); MASSIERER, Jonas, 16269 Schulzendorf (DE); MATIWE, Marco, 12555 Berlin (DE)
(74) Vertreter: Siemens Patent Attorneys
(86) Internationale Anmeldenummer: PCT/EP2020/067978
(87) Internationale Veröffentlichungsnummer: WO 2021/037419

(56) Entgegenhaltungen:
- CN-A- 106 908 473
- JP-B2- 2 914 636
- JP-B2- 5 941 686
- US-A1- 2007 119 226

## Beschreibung

Die Erfindung betrifft ein Sensorelement zur Erfassung von Prozessparametern an einem Messpunkt in einer Sinteranlage. Weiterhin betrifft die Erfindung eine Vorrichtung zur Kombination mehrerer Sensorelemente zur Erfassung von Prozessparametern an mehreren Messpunkten. Die Erfindung kann dabei in Anlagen zum Einsatz kommen, die bei der Herstellung von Sinterverbindungen zum Anbinden von (ungehäusten) HalbleiterChips, im Englischen auch "(bare) Dies" genannt, verwendet werden. Prinzipiell kann die Erfindung dabei bei gängigen Fügeprozessen mit Sinterpressen zum Einsatz kommen, z. B. das Fügen eines Kühlkörpers auf ein Substrat. Als Beispiel ist hier das Silber-Sintern zu nennen, das als alternative Verbindungstechnologie zu herkömmlichen Lötprozessen in der Leistungselektronik immer häufiger zur Anwendung kommt. Eine Sinteranlage weist dazu ein Werkzeug, z. B. einen Stempel, auf, das zur Ausübung von Druck und zum Einprägen von Temperatur ausgebildet ist und dadurch eine Sinterverbindung zwischen zwei Fügepartnern herstellt. Bisher war es nur aufwendig möglich einzelne Prozessparameter, zum Beispiel Temperatur oder Kraft oder Umweltbedingungen, separat zu erfassen und anschließend zu untersuchen. Eine Korrelation der Messwerte zu den Messpunkten und von verschiedenen Größen untereinander ist nur schwer möglich, wenn der räumliche Zusammenhang, z.B. zwischen Temperatur und Kraft, nur ungenau definiert ist oder aufwendig durch mehrere Messreihen erfasst werden muss.

Das Dokument JP 5941686 B2 beschreibt z.B. eine Sinterpresse mit einem Temperatursensor und einem Kraftsensor, die getrennt angeordnet sind.

Es ist Aufgabe der Erfindung, Kombinationen aus mehreren Prozessparametern eines Sinterprozesses, insbesondere eines Füge-Sinterprozesses, einfach und gleichzeitig erfassen zu können.

Die Aufgabe wird durch ein Sensorelement gelöst, das zur Erfassung von Prozessparametern an einem Messpunkt in einer Sinteranlage ausgebildet ist. Das Sensorelement weist dazu zumindest einen ersten Temperatursensor und einen Kraftsensor auf, wobei die beiden Sensoren so angeordnet sind, dass Kraft und Temperatur an dem Messpunkt erfasst werden können, an dem das Sensorelement angeordnet ist. Durch die örtliche Nähe der beiden Sensoren ist es möglich die Prozessparameter direkt miteinander korrelierend und für spätere Auswertungen aussagekräftig und ohne Notwendigkeit von Modellannahmen zu erfassen. Weiterhin ist es möglich, ein besonders kompaktes Sensorelement bereitzustellen.

In einer weiteren Ausführungsform weist das Sensorelement einen zweiten Temperatursensor auf. Der zweite Temperatursensor ist dabei an einer gegenüberliegenden Seite des Sensorelements bezüglich des ersten Temperatursensors angeordnet. Besonders vorteilhaft ist es, wenn einer der beiden Temperatursensoren an der Oberseite des Sensorelements angeordnet ist und der andere an der Unterseite des Sensorelements angeordnet ist, wobei die Oberseite des Sensorelements die Seite ist, die dem Sinterstempel zugewandt und die Unterseite die Seite ist, die entweder direkt oder über eine Basiseinheit auf der Bodenseite der Sinteranlage angeordnet ist. So können die Temperaturen einer ggf. bodenseitig vorhandenen Heizplatte und die Temperatur des Sinterstempels direkt erfasst und ausgewertet werden. In anderen Worten kann die Temperatur an der Ober- und der Unterseite des Sensorelements erfasst werden.

In einer weiteren Ausführungsform weist das Sensorelement ein Distanzausgleichselement auf, das so ausgebildet ist, dass Höhenunterschiede zwischen zumindest einem der Temperatursensoren und einer zu messenden Oberfläche ausgeglichen werden. Die zu messende Oberfläche kann dabei beispielsweise der Stempel der Sinteranlage bzw. der Sinterpresse im geschlossenen Zustand sein. Wenn der Stempel oder die Auflagefläche nicht ideal ausgerichtet ist, kann es hier zu Höhenunterschieden kommen. Wenn beispielsweise ein Sensorelement vollen Kontakt hat und ein weiteres Sensorelement ohne das Distanzausgleichselement keinen Kontakt hätte, kann somit durch das Distanzausgleichselement ein Kontakt hergestellt werden. Das Distanzausgleichselement kann dabei beispielsweise als ein federndes Element oder als ein elastisches Pufferelement ausgebildet sein, das sich unter Druck verformen lässt. Vorteilhaft ist hier, dass eine besonders gleichmäßige Messung der Temperatur möglich ist, auch wenn keine ideale Ausrichtung der beteiligten Komponenten sichergestellt werden kann. Hier können vorzugsweise Höhenunterschiede bis zu mehreren 100µm ausgeglichen werden.

In einer weiteren Ausführungsform ist der Kraftsensor zwischen dem ersten Temperatursensor und einem zweiten Temperatursensor angeordnet. Dies hat die Vorteile, dass der Kraftsensor nicht direkt mit den heißen Oberflächen in Berührung kommt, da dort zunächst die Temperatursensoren angeordnet sind und dass die Kraft, die direkt auf die beiden Temperaturmesspunkte einwirkt, auch erfasst werden kann. Dies ermöglicht ein besonders genaues Erfassen der Zusammenhänge zwischen Temperatur und Krafteinwirkung.

In einer weiteren Ausführungsform weist das Sensorelement einen Wegsensor auf, der so ausgebildet ist, dass eine Annäherung einer zu messenden Oberfläche an das Sensorelement erfasst werden kann. Insbesondere ist von Interesse, wenn sich der Sinterstempel einer Sinteranlage an das Sensorelement annähert und damit den Wegverlauf mit dem Kraftverlauf und dem Temperaturverlauf korrelieren werden kann. Der Wegsensor kann dabei vorteilhaft als kapazitiver Wegsensor ausgebildet sein, der sich wegen seiner hohen Robustheit und Auflösung gut eignet. Weiterhin kann, wenn der Stempel bereits mit dem Sensorelement in Kontakt ist, die Komprimierung des Sensorelements erfasst werden, sofern dies vorgesehen ist.

In einer weiteren Ausführungsform weist das Sensorelement einen Sauerstoffsensor auf. Dieser dient zur Erfassung der Atmosphärenbedingungen und kann beispielsweise auf luftströmungsbedingte Schwankungen der Atmosphäre während des Sintervorgangs hinweisen.

In einer weiteren Ausführungsform weist das Sensorelement eine Signalschnittstelle auf. Um die Signalqualität analoger Signale möglichst wenig zu beeinflussen, haben sind Elementseitig fest verdrahtete Lösungen denkbar. Auf Seite des Erfassungsmoduls sind lösbare Verbindungen denkbar. Die Signalschnittstelle dient dabei insbesondere zur Kommunikation mit einem Erfassungsmodul, kann aber auch zur direkten Kommunikation mit einem Auswerterechner ausgebildet sein. Das Erfassungsmodul ist dabei dazu ausgebildet, die Messdaten aus den Sensorelementen zu erfassen und kann dabei zur digitalen oder analogen Kommunikation an das Sensorelement angebunden sein.

Die Aufgabe wird weiterhin durch eine Vorrichtung gelöst, die zur Erfassung von Prozessparametern an Messpunkten in einer Sinteranlage ausgebildet ist. Dazu weist die Vorrichtung mehrere Sensorelemente auf, die an mehreren Messpunkten angeordnet werden können. Die Vorrichtung weist weiterhin ein Erfassungsmodul auf, das zur Erfassung der Prozessparameter an den Messpunkten ausgebildet ist, an dem die Sensorelemente angeordnet sind. Durch die Kombination mehrerer Sensorelemente können Verteilungen von Temperatur und Kraft und ggf. weiterer Größen über eine Fläche bestimmt werden. Dies ermöglicht eine genauere Kalibrierung, einen qualitativ hochwertigeren Betrieb und eine Beseitigung von Fehlern beim Betrieb von Sinteranlagen.

In einer weiteren Ausführungsform ist das Erfassungsmodul zur Auswertung von Signalen der Sensorelemente ausgebildet. Das Erfassungsmodul kann dabei beispielsweise zur Auswertung analoger Messignale aus den Sensorelementen ausgebildet sein. Dazu kann eine Auswerteelektronik für einen kapazitiven Wegsensor und/oder einen Kraftsensor vorgesehen sein. Die analogen Messsignale können dann mittels eines AD-Wandlers als Digitale Messwerte zur Verfügung gestellt werden.

In einer weiteren Ausführungsform ist zumindest ein Teil der Sensorelemente voneinander verschieden ausgebildet. Das heißt, es können verschiedenartige Sensorelemente zum Einsatz kommen, wobei z. B. an weniger kritischen Stellen lediglich Sensorelemente mit einem Temperatursensor und einem Kraftsensor ausgestattet sind und andere wiederum die komplette Auswahl von Kraftsensoren, Temperatursensoren, Wegsensoren und ggf. weiterer Sensoren aufweisen. Es ist denkbar, dass an mechanisch unkritischen aber thermisch kritischen Stellen lediglich einfache Sensorelemente verwendet werden, die nur einen Temperatursensor und keinen Kraftsensor aufweisen. Besonders vorteilhaft ist, dass mit der Vorrichtung Sensorelemente, egal welcher Ausprägung flexibel untereinander kombiniert werden können.

In einer weiteren Ausführungsform weist die Vorrichtung eine Basiseinheit auf, die zur Aufnahme der Sensorelemente dient. Dabei kann es besonders vorteilhaft sein, wenn die Basiseinheit nicht nur zur Aufnahme, sondern auch zur Befestigung der Sensorelemente ausgebildet ist. Hier ist ein Stecksystem möglich, in dem die Sensorelemente angeordnet und durch Einstecken befestigt werden können.

In einer weiteren Ausführungsform weist die Vorrichtung eine Basiseinheit auf, die zur elektrischen Kontaktierung der Sensorelemente dient. Es ist denkbar, dass in der Basiseinheit elektrische Kontakte vorgesehen sind, die eine Verkabelung der Sensorelemente ersetzen. Besonders vorteilhaft ist es, wenn die elektrische Kontaktierung in den Aufnahmen, wie obenstehend beschrieben, vorgesehen sind.

In einer weiteren Ausführungsform weist die Vorrichtung eine Energieversorgungseinrichtung auf. Dies kann in Form eines Akkus vorgesehen sein. Alternativ sind auch induktive oder anderweitige Energieversorgungen denkbar, die möglichst den Messprozess nicht beeinflussen. Eine Akkulösung hat den Vorteil, dass die Vorrichtung dann besonders autark agieren kann. Die Energieversorgungseinrichtung kann dabei auch so klein dimensioniert werden, dass die Energieversorgung zur Bereitstellung der Energie für einen Messzyklus (d. h. einen Zyklus der Sinteranlage) ausreicht. Hier können z. B. besonders robuste Kondensatorlösungen zum Einsatz kommen. In anderen Worten kann die Energieversorgungseinrichtung zur Versorgung der Sensorelemente für zumindest einen Durchlauf ausgebildet sein.

Die Vorrichtung kann auch einen Beschleunigungssensor aufweisen. Der Beschleunigungssensor ist dabei zum Erfassen der Beschleunigung der Vorrichtung und damit auch der Sensorelemente beim Durchlaufen eines Sinterprozesses ausgebildet. Damit können hohe Beschleunigungen bzw. Vibrationen, die auf die Vorrichtung einwirken, ermittelt werden, die eine Beschädigung der zu bearbeitenden Baugruppe nach sich ziehen könnten. Alternativ können auch niedrige Beschleunigungen ermittelt werden, die noch optimierbar sind, um einen zeitlich optimalen Durchlauf durch den Produktionsprozess zu ermöglichen.

In einer weiteren Ausführungsform weist die Vorrichtung eine Kommunikationsschnittstelle auf. Diese kann drahtgebunden sein, beispielsweise eine USB-Schnittstelle, möglich ist aber auch eine drahtlose Schnittstelle, die die Daten der Vorrichtung direkt aus dem Prozess nach außen zugänglich macht. Dies hat den Vorteil, dass eine direkte und sofortige Auswertung der gewonnenen Messdaten schon während des Prozessdurchlaufs durchgeführt werden kann und somit auch während des Prozessdurchlaufs Optimierungen an der Anlage durchgeführt werden könnten.

Im Folgenden wird die Erfindung anhand der in den Figuren dargestellten Ausführungsbeispiele näher beschrieben und erläutert. Es zeigen:
- FIG 1: eine Ausführungsform eines Sensorelements,
- FIG 2: eine Vorrichtung und
- FIG 3: eine Draufsicht der Vorrichtung.

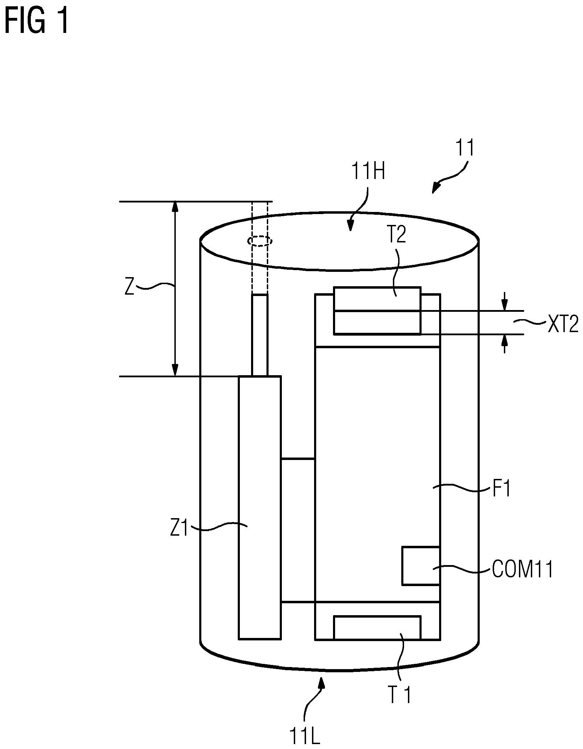

FIG 1 zeigt schematisch ein Sensorelement 11 in einer erweiterten Ausbaustufe. Das Sensorelement 11 weist eine Oberseite 11H und eine Unterseite 11L auf und ist in diesem Fall zylinderförmig ausgebildet. Zur Erfassung der Temperatur an der Unterseite 11L ist ein erster Temperatursensor T1 vorgesehen. Weiterhin ist zur Erfassung der Temperatur an der Oberseite 11H ein zweiter Temperatursensor T2 vorgesehen, der in diesem Fall ein Distanzausgleichselement XT2 aufweist, das kleinere Distanzen bezüglich der Oberseite ausgleichen kann. Weiterhin weist das Sensorelement 11 einen Wegsensor Z1 auf, der zur Erfassung eines Weges Z, der über die Dimensionen des Sensorelements 11 hinausgehen kann, ausgebildet ist. Dazu weist der Wegsensor Z1 einen stabförmigen Messkopf auf, der den Abstand von einer zu messenden Oberfläche zum Sensorelement erfassen kann. Alternativ oder ergänzend kann der Wegsensor auch kapazitiv ausgebildet sein. Der zu messende Abstand Z ist in der Regel der Abstand des Sinterstempels der Sinterpresse zum Sensorelement 11 bzw. zur Oberseite 11H des Sensorelements 11. Das Sensorelement 11 weist weiterhin einen Kraftsensor F1 auf, der zwischen den beiden Temperatursensoren T1, T2 angeordnet ist. Weiterhin weist das Sensorelement 11 eine Signalschnittstelle COM11 auf, die zur Ausgabe von Messsignalen an ein Erfassungsmodul ausgebildet sein kann. Die Signalschnittstelle COM11 kann dabei drahtgebunden und zur analogen Kommunikation mit einer Auswerteeinrichtung ausgebildet sein.

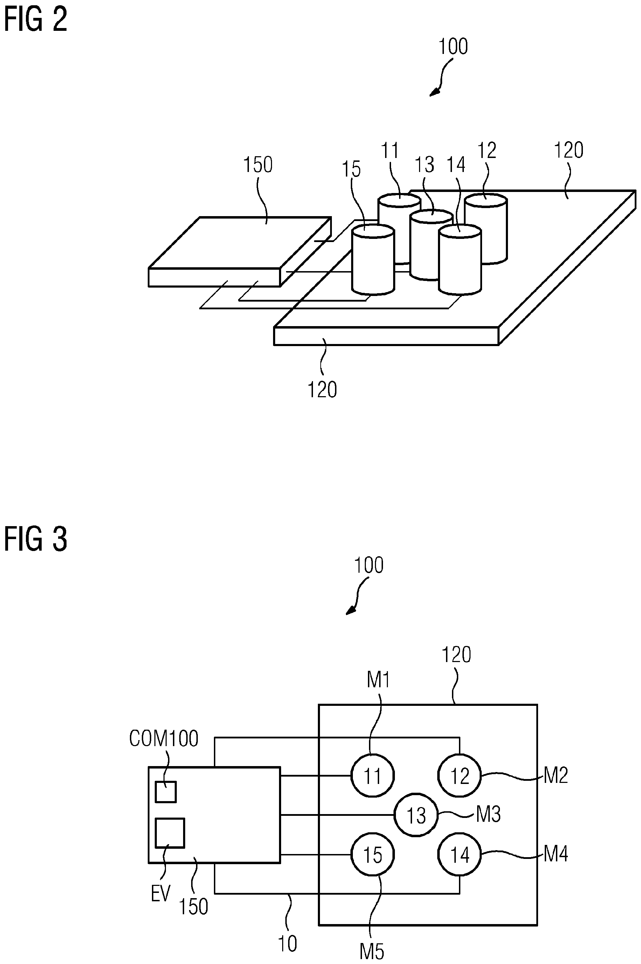

FIG 2 zeigt eine Vorrichtung 100, ein Erfassungsmodul 150 und fünf Sensorelemente 11,...,15. Die Sensorelemente 11,...,15 sind dabei auf einer Basiseinheit 120 angeordnet. Die Basiseinheit 120 kann so ausgestaltet sein, dass die Sensorelemente 11,...,15 eingesteckt werden können und sowohl oben als auch unten aus der Basiseinheit 120 herausragen können, damit ein direkter Kontakt der Sensorelemente 11,...,15 zur Prozesskammer der Sinteranlage ermöglicht wird. Die Sensorelemente 11,...,15 können dabei frei angeordnet werden und sind auf die Dimensionen der Sinteranlage anpassbar. Es können einzelne Sensorelemente 11,...,15 hinzugefügt oder weggelassen werden. Es ist möglich mit der Vorrichtung nur ein einziges Sensorelement 11,...,15 zu verwenden. Die Basiseinheit 120 und das Erfassungsmodul 150 sind hier zweiteilig ausgestaltet, können aber auch einteilig ausgestaltet sein. Es ist möglich, dass die Basiseinheit 120 bereits eine gewisse Anzahl an fest installierten Sensorelemente 11,...,15 aufweist, die noch um weitere Sensorelemente 11,...,15 ergänzt werden können. Die Sensorelemente 11,...,15 sind mit Messleitungen an die Erfassungsmodul 150 angebunden.

FIG 3 zeigt eine Draufsicht der Vorrichtung 100 aus FIG 2. Dabei ist zu sehen, dass das Erfassungsmodul 150 einen Beschleunigungssensor A1, ein Kommunikationsmodul COM100 sowie eine Energieversorgungseinrichtung EV aufweist. Die Anordnung des Kommunikationsmoduls COM100 und der Energieversorgungseinrichtung EV im Erfassungsmodul 150 hat sich als zweckmäßig erwiesen, da so eine hohe Integrationsdichte ermöglicht wird. Alternative Anordnungen sind dabei ebenso möglich. Weiterhin ist zu sehen, dass die Sensorelemente 11, ..., 15 direkt mit der Erfassungsmodul 150 über Datenleitungen 10 verbunden sind. Diese Datenleitungen 10 können dabei in der Basiseinheit 120 eingebettet oder können flexibel als externe Leitungen ausgestaltet sein. Die Verteilung der Sensorelemente 11,...,15 ist dabei wie folgt: Das Sensorelement 11 ist am Messpunkt M1 angeordnet, das Sensorelement 12 am Messpunkt M2, ... und das Sensorelement 15 am Messpunkt M5. Die Anordnung der Sensorelemente an den Messpunkten M1,...,M5 ist dabei frei wählbar und kann durch eine Basiseinheit 120 unterstützt werden. Die Anordnung der Messpunkte ist allerdings davon abhängig, welches Sintersystem vermessen werden soll. Weiterhin ist die Anordnung der Messpunkte abhängig vom Produktlayout, dessen Parameter vermessen werden sollen. Es hat sich als vorteilhaft erwiesen die Messpunkte so insbesondere dort anzuordnen, wo eine genaue Auswertung der Prozessparameter notwendig ist. Dies ist insbesondere an den Orten der Fall, wo die Halbleiter in der Sinterpresse zu erwarten sind.

Zusammenfassend betrifft die Erfindung ein Sensorelement (11,...,15) zur Erfassung von Prozessparametern an einem Messpunkt (M1,...,M5) in einer Sinteranlage. Weiterhin betrifft die Erfindung eine Vorrichtung (100) zur Kombination mehrerer Sensorelemente (11,15) zur Erfassung von Prozessparametern an mehreren Messpunkten (M1,...,M5). Um Kombinationen aus mehreren Prozessparametern eines Sinterprozesses, insbesondere eines Füge-Sinterprozesses, einfach und gleichzeitig erfassen zu können wird ein Sensorelement (11,...,15) zur Erfassung von Prozessparametern an einem Messpunkt (M1,...,M5) in einer Sinterpresse / Sinteranlage vorgeschlagen. Das Sensorelement (11,...,15) weist dazu einen ersten Temperatursensor (T1) und einen Kraftsensor (F1) auf, die so angeordnet sind, dass Kraft und Temperatur an dem Messpunkt (M1,...,M5) erfasst werden, an dem das Sensorelement angeordnet ist. Die Erfindung betrifft weiter eine Vorrichtung (100) zur Erfassung von Prozessparametern an Messpunkten (M1,...,M5) in einer Sinteranlage, aufweisend mehrere erfindungsgemäße Sensorelemente (11,...,15) und ein Erfassungsmodul (150), das zur Erfassung der Prozessparameter an den Messpunkten (M1,...,M5) ausgebildet ist, an dem die Sensorelemente (11,...,15) angeordnet sind.

## Patentansprüche

1. Sensorelement (11,15) zur Erfassung von Prozessparametern an einem Messpunkt (M1,...,M5) in einer Sinterpresse oder einer Sinteranlage, aufweisend zumindest einen ersten Temperatursensor (T1) und einen Kraftsensor (F1), die so angeordnet sind, dass Kraft und Temperatur an dem Messpunkt (M1,...,M5) erfasst werden, an dem das Sensorelement angeordnet ist.

2. Sensorelement (11,...,15) nach Anspruch 1, aufweisend einen zweiten Temperatursensor (T2), der an einer gegenüberliegenden Seite (11H, 11L) des Sensorelements (11,...,15) bzgl. des ersten Temperatursensors (T1) angeordnet ist.

3. Sensorelement (11,15) nach einem der vorhergehenden Ansprüche, aufweisend ein Distanzausgleichselement (XT2), das so ausgebildet ist, dass Höhenunterschiede zwischen zumindest einem der Temperatursensoren (T1, T2) und einer zu messenden Oberfläche ausgeglichen werden.

4. Sensorelement (11,15) nach einem der vorhergehenden Ansprüche, wobei der Kraftsensor (F1) zwischen dem ersten Temperatursensor (T1) und einem zweiten Temperatursensor (T2) angeordnet ist.

5. Sensorelement (11,15) nach einem der vorhergehenden Ansprüche, aufweisend einen Wegsensor (Z1), der so ausgebildet ist, dass eine Annäherung einer zu messenden Oberfläche an das Sensorelement (11,...,15) erfasst werden kann.

6. Sensorelement (11,15) nach einem der vorhergehenden Ansprüche, aufweisend einen Sauerstoffsensor.

7. Sensorelement (11,...,15) nach einem der vorhergehenden Ansprüche, aufweisend eine Signalschnittstelle (C11).

8. Vorrichtung (100) zur Erfassung von Prozessparametern an Messpunkten (M1,...,M5) in einer Sinteranlage, aufweisend mehrere Sensorelemente (11,...,15) nach einem der vorhergehenden Ansprüche und ein Erfassungsmodul (150), das zur Erfassung der Prozessparameter an den Messpunkten (M1,...,M5) ausgebildet ist, an dem die Sensorelemente (11,...,15) angeordnet sind.

9. Vorrichtung (1) nach Anspruch 8, wobei das Erfassungsmodul (150) zur Auswertung von Signalen der Sensorelemente ausgebildet ist.

10. Vorrichtung (1) nach Anspruch 8 oder 9, wobei zumindest ein Teil der Sensorelemente (11,15) voneinander verschieden ausgebildet ist.

11. Vorrichtung (100) nach einem der Ansprüche 8 bis 10, aufweisend eine Basiseinheit (120), die zur Aufnahme, insbesondere zur Befestigung, der Sensorelemente (11,15) dient.

12. Vorrichtung (100) nach einem der Ansprüche 8 bis 11, aufweisend eine Basiseinheit (120), die zur elektrischen Kontaktierung der Sensorelemente (11,15) dient.

13. Vorrichtung (100) nach einem der Ansprüche 8 bis 12, aufweisend eine Energieversorgungseinrichtung (EV).

14. Vorrichtung (100) nach einem der Ansprüche 8 bis 13, aufweisend eine Kommunikationsschnittstelle (COM100).

## Claims

1. Sensor element (11,...,15) for recording process parameters at a measurement point (M1,...,M5) in a sintering press or a sintering plant, having at least a first temperature sensor (T1) and a force sensor (F1) which are arranged such that force and temperature are recorded at that measurement point (M1,...,M5) at which the sensor element is arranged.

2. Sensor element (11,...,15) according to Claim 1, having a second temperature sensor (T2) which is arranged on an opposite side (11H, 11L) of the sensor element (11,...,15) with respect to the first temperature sensor (T1).

3. Sensor element (11,...,15) according to one of the preceding claims, having a distance compensation element (XT2) which is designed such that height differences between at least one of the temperature sensors (T1, T2) and a surface to be measured are compensated for.

4. Sensor element (11,...,15) according to one of the preceding claims, wherein the force sensor (F1) is arranged between the first temperature sensor (T1) and a second temperature sensor (T2) .

5. Sensor element (11,...,15) according to one of the preceding claims, having a travel sensor (Z1) which is designed such that it is possible to detect when a surface to be measured approaches the sensor element (11,...,15).

6. Sensor element (11,...,15) according to one of the preceding claims, having an oxygen sensor.

7. Sensor element (11,...,15) according to one of the preceding claims, having a signal interface (C11).

8. Device (100) for recording process parameters at measurement points (M1,...,M5) in a sintering plant, having a plurality of sensor elements (11,...,15) according to one of the preceding claims and a recording module (150) which is designed to record the process parameters at the measurement points (M1,...,M5) at which the sensor elements (11,...,15) are arranged.

9. Device (1) according to Claim 8, wherein the recording module (150) is designed to evaluate signals from the sensor elements.

10. Device (1) according to Claim 8 or 9, wherein at least some of the sensor elements (11,...,15) differ from one another.

11. Device (100) according to one of Claims 8 to 10, having a base unit (120) which is used to accommodate, in particular fasten, the sensor elements (11,...,15) .

12. Device (100) according to one of Claims 8 to 11, having a base unit (120) which is used to make electrical contact with the sensor elements (11,...,15).

13. Device (100) according to one of Claims 8 to 12, having an energy supply device (EV).

14. Device (100) according to one of Claims 8 to 13, having a communication interface (COM100).

## Revendications

1. Elément (11, ..., 15) capteur de détection de paramètres de processus en un point (M1, ..., M5) de mesure dans une presse de frittage ou dans une installation de frittage, comportant au moins un premier capteur (T1) de température et un capteur (F1) de force, qui sont disposés de manière à détecter une force et une température au point (M1, ..., M5) de mesure, où l'élément capteur est disposé.

2. Elément (11, ..., 15) capteur suivant la revendication 1, comportant un deuxième capteur (T2) de température, qui est disposé d'un côté (11H, 11L) opposé de l'élément (11, ..., 15) capteur, en par rapport au premier capteur (T1) de température.

3. Elément (11, ..., 15) capteur suivant l'une des revendications précédentes, comportant un élément (XT2) de compensation de la distance, qui est conçu de manière à compenser des différences de niveau entre au moins l'un des capteurs (T1, T2) de température et une surface à mesurer.

4. Elément (11, ..., 15) capteur suivant l'une des revendications précédentes, dans lequel le capteur (F1) de force est disposé entre le premier capteur (T1) de température et un deuxième capteur (T2) de température.

5. Elément (11, ..., 15) capteur suivant l'une des revendications précédentes, comportant un capteur (Z1) de chemin, qui est constitué de manière à pouvoir détecter qu'une surface à mesurer se rapproche de l'élément (11, ..., 15) capteur.

6. Elément (11, ..., 15) capteur suivant l'une des revendications précédentes, comportant un capteur d'oxygène.

7. Elément (11, ..., 15) capteur suivant l'une des revendications précédentes, comprenant une interface (C11) de signal.

8. Dispositif (100) de détection de paramètres de processus en des points (M1, ..., M5) de mesure dans une installation de frittage, comportant plusieurs éléments (11, ..., 15) capteurs suivant l'une des revendications précédentes et un module (150) de détection, qui est constitué pour la détection des paramètres de processus aux points (M1, ..., M5) de mesure, où les éléments (11, ..., 15) capteurs sont disposés.

9. Dispositif (1) suivant la revendication 8, dans lequel le module (150) de détection est conformé pour l'analyse de signaux des éléments capteurs.

10. Dispositif (1) suivant la revendication 8 ou 9, dans lequel au moins une partie des éléments (11, ..., 15) capteurs sont constitués en étant différents les uns des autres.

11. Dispositif (100) suivant l'une des revendications 8 à 10, comportant une unité (120) de base, qui sert au logement, notamment à la fixation, des éléments (11, ..., 15) capteurs.

12. Dispositif (100) suivant l'une des revendications 8 à 11, comportant une unité (120) de base, qui sert à la mise en contact électrique des éléments (11, ..., 15) capteurs.

13. Dispositif (100) suivant l'une des revendications 8 à 12, comportant un dispositif (EV) d'alimentation en énergie.

14. Dispositif (100) suivant l'une des revendications 8 à 13, comportant une interface (COM100) de communication.
